# NEW EUROPEAN PATENT SPECIFICATION

(11) **EP 0 244 134 B2**
(45) Date of publication and mention of the opposition decision: **05.08.1998**
(45) Mention of the grant of the patent: 24.06.1992
(21) Application number: 87303443.3
(22) Date of filing: 16.04.1987
(51) Int. Cl.: H02K 9/04, H02K 9/28

(54) **Cooling in electric motors**
Kühlung in elektrischen Maschinen
Refroidissement dans les machines électriques

(30) Priority: 21.04.1986 GB 8609709; 25.11.1986 GB 8628139; 23.03.1987 GB 8706835
(43) Date of publication of application: 04.11.1987
(73) Proprietor: JOHNSON ELECTRIC S.A., CH-2300 La Chaux-de-Fonds (CH)
(72) Inventor: Strobl, Georg, Repulse Bay (HK)
(74) Representative: Higgins, Michael Roger

(56) References cited:
- AU-A- 451 616
- DE-A- 144 107
- DE-A- 1 488 568
- DE-A- 2 164 084
- DE-A- 2 617 661
- DE-B- 1 047 298
- DE-C- 208 966
- FR-A- 2 169 838

## Description

The present invention relates to permanent magnet direct current electric motors and in particular to cooling of fractional horsepower p.m.d.c. motors.

There is a constant demand to increase the motor power output of small motors for a given motor size. When such small motors are required to deliver large output powers there is a difficulty in dissipating the heat generated inside the motor through power losses. These motors have small masses and so can experience very rapid rises in temperature in critical areas. At excessive temperatures, various components are subject to damage.

It is known to incorporate a forced ventilation fan within the motor, mounted on the motor shaft, but heretofore this has required an increase in at least the length of the motor which defeats the objective of increasing the power for a given motor size.

It is also known to provide enlarged terminal sections in a commutator, which effectively act as fan blades of a centrifugal fan. Such a commutator is illustrated in US-A-4 764 700. However in many applications it is difficult to provide such an enlarged commutator since it might, for example, interfere with the winding areas on the armature.

It has been proposed in Australian Patent Specification AU-A-451616 to fit fan blades to a commutator to cool the commutator of an electric motor. A second fan is provided to cool the armature of the motor. It has also been proposed in German Patent Specification DE-B-1047298 to fit fan blades between an armature and a commutator but in that case the fan takes up considerable axial space and increases the overall length of the motor.

Moeller Werr, Leitfaden der Elektrotechnik, Vol. 3, Konstruktion und Festigkeitsberechnungen elektrischer Maschinen, by Dr. Ing. Curt von Dobbeler, B.G. Teubner Verlagsgesellschaft, Stuttgart, 1955 describes at page 25 the use of slot closing strips to prevent outward movement of the coil winding. The strips also prevent the build up of carbon dust in the winding tunnels. The effect of the slot closing strips and the resin coating which is added to bond the winding wire and strips in place is to block the winding tunnels. DE-UM-7 028 025 describes an electric motor in which fan blades are mounted on a ring which joins slot closing strips and illustrates that the effective air flow caused by the fan blades is only from over the commutator. In DE-U-7 028 025 the fan blades extend in the axial direction of the armature, away from the slot closing strips.

DE-C-144 107 on which the preamble of claims 1 and 2 is based describes a direct current electric motor in which a centrifugal fan is mounted with the eye of the fan embracing the outer end of an armature coil winding support.

The present invention aims to provide improved cooling in an electric motor by drawing air over both the commutator and the armature coils.

A first aspect of the present invention provides a fractional horsepower direct current electric motor, comprising: a motor casing a wound armature and a commutator mounted on a motor shaft for rotation in the motor casing, the armature comprising an armature core having a central core mounted fast on the shaft and a plurality of pole sections extending radially outwardly from the central core, adjacent pole sections being separated by a gap at their outer circumference, and a plurality of armature coils wound around respective pole sections and terminated on tangs of the commutator to electrically connect the coils to the commutator,
an end cap closing the motor casing and supporting brush gear of which brushes proper contact the commutator;
windows in the motor casing between the armature and the brushes; and
a centrifugal fan mounted about the motor shaft between the core of the armature and the brushes, the fan comprising a plurality of radially extending fan blades integral with an annular blade support defining the eye of the fan,
characterised in that the motor is a permanent magnet direct current motor; the motor casing is a can-like casing and permanent magnet means is mounted in the casing;
the armature core pole sections have a mushroom cross-section; and in that the annular blade support comprises a cylindrical wall which rests on an axial end of the armature core at a position adjacent the radially outer peripheral surface of the armature core and axially extending tabs extend from the cylindrical wall and are located in the gap between adjacent pole sections, and the blades extend away from the support in the axial direction away from the tabs and over the commutator tangs, the blades being radially spaced from the tangs, such that air is drawn into the eye of the fan from over the commutator and the armature coils from both axial sides of the fan to cool the commutator and armature.

A second aspect of the present invention provides a fractional horsepower direct current electric motor, comprising:
a motor casing a wound armature and a commutator mounted on a motor shaft for rotation in the motor casing, the armature comprising an armature core having a central core mounted fast on the shaft and a plurality of pole sections extending radially outwardly from the central core, adjacent pole sections being separated by a gap at their outer circumference, a plurality of armature coils wound around respective pole sections and terminated on tangs of the commutator to electrically connect the coils to the commutator;
an end cap closing the motor casing and supporting brush gear of which brushes proper contact the commutator,
windows in the motor casing between the armature and the brushes; and
a centrifugal fan mounted about the motor shaft between the core of the armature and the brushes, the fan comprising a plurality of radially extending fan blades integral with an annular blade support defining the eye of the fan,
characterised in that the motor is a permanent magnet direct current motor; the motor casing is a can-like casing and permanent magnet means is mounted in the casing;
the armature core pole sections have a mushroom cross-section; and in that
a fan mounting member is mounted on an end face of the armature core, the annular blade support comprises a cylindrical wall adjacent the radially outer peripheral surface of the armature core, the cylindrical wall and the fan mounting member having complementary formations by which the fan is snap-fittably engaged with the fan mounting member, the blades extending away from the support in the axial direction away from the armature core and over the commutator tangs, the blades being radially spaced from the tangs, such that air is drawn into the eye of the fan over the commutator and the armature coils from both axial sides of the fan to cool the commutator and armature.

With such a fan air can be drawn into the eye of the fan over both the commutator and the armature, both of which are subjected to large temperature rises since losses occur due to electrical heating and friction and expelled through the windows in the motor casing. Moreover, the position of the blade support does not detract from the flow of air over the commutator.

The fan is placed around the section of the commutator where winding wires of the armature coils are attached to the commutator. This area is normally provided to allow for commutator tangs to be located near the wound coils. Once the wire connections to the commutator tangs have been made the area has no further purpose. By making use of this unused area for the fan, there is no need to lengthen the motor.

Preferably, the blades extend radially outwards beyond the outer peripheral surface of the armature.

Preferably, the annular blade support comprises a cylindrical wall and an annular blade reinforcing plate extending radially from the end of the wall remote from the armature. In this case the reinforcing plate may extend between the radially innermost and radially outermost edges of the blades. However, advantageously, the blades extend radially beyond the blade support.

Other advantages and preferred features of the invention will be apparent from the accompanying claims and following description.

The invention will be further described, by way of example, with reference to the accompanying drawings, in which:-
Figure 1 is a side cross-sectional view of a permanent magnet direct current small electric motor embodying the invention;
Figure 2 shows a modification of the motor of Figure 1;
Figure 3 is a cross-sectional view of a fan of the motor of Figures 1 and 2, along the line III-III of Figure 4;
Figure 4 is a front view of the fan of Figure 3;
Figure 5 is a rear view of the fan of Figure 3;
Figure 6 is a transverse cross-sectional through the armature of Figure 1;
Figure 7 is a view similar to Figure 1 and showing an alternative way of mounting the fan;
Figure 8 is a perspective view showing part of the armature and fan mounting member of the motor of Figure 7; and
Figure 9 is a view similar to Figure 3 and showing an alternative fan.

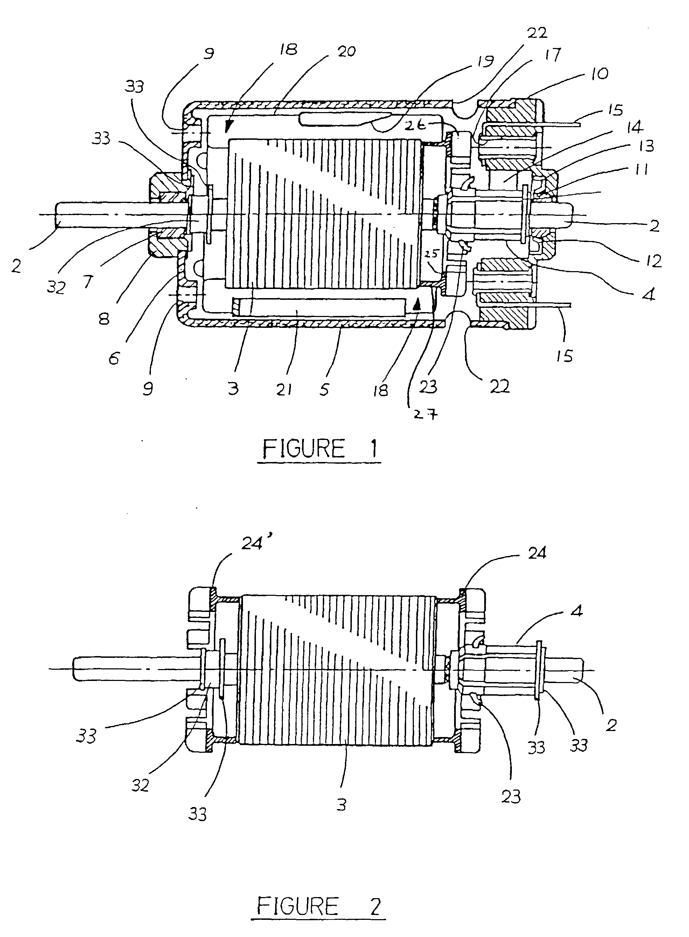

Referring to Figure 1, a small, fractional horsepower permanent magnet direct current motor is illustrated. The motor comprises a motor shaft 2 which carries a wound armature 3 and commutator 4. The commutator 4 and armature 3 are mounted fast on the shaft and the armature is wound and connected to the commutator in the manner generally known in the art.

The shaft 2 is mounted in a cylindrical can-like metal casing 5. Casing 5 is closed at one end 6 by an integrally formed end plate. End plate 6 carries a bearing 7 in a housing 8, the shaft 2 being journalled in the bearing 7. A brass collar 32 is a force fit on the shaft 2 to limit the axial movement of the shaft through the bearing 7.

End plate 6 has a plurality, typically 4, of circumferentially extending slots 9 for ventilation of the inside of the motor.

A plastics end cap 10, typically of nylon, houses a self aligning sintered bearing 11 which is held in place by axially extending tabs 12 of a washer 13 which is pressed into the end cap. The end cap supports brush gear comprising a pair of carbon brushes 14 (one is seen in Figure 1) which are urged against the commutator 4 by brush leaves (not seen in Figure 1) connected to power supply tags 15.

Washers 33 may be provided to adjust the axial position of the armature relative to the permanent magnets and provide bearing surfaces in the axial direction.

Apertures (not shown) are formed in the end cap 10 allowing further ventilation of the inside of the motor.

The casing 5 carries two permanent magnets 18, which each bear at one axial edge 20 against a respective tang 19 and are urged apart at their other axial edges by a 'U' shape spring 21.

Windows in the form of circumferentially extending slots 22 are provided in the casing 5 in the region between the brushes 14 and armature 3.

The construction thus for described is well known in the art and embodied in a small p.m.d.c. motor manufactured and sold by the applicants under catalogue No. HC613.

The improvement provided by the present invention in the construction of Figure 1, is the disposition of a fan 24 between the brushes 14 and the armature 5, about the region of commutator tangs 23 which are used to electrically connect wires of the coils in armature 5 to the commutator 4.

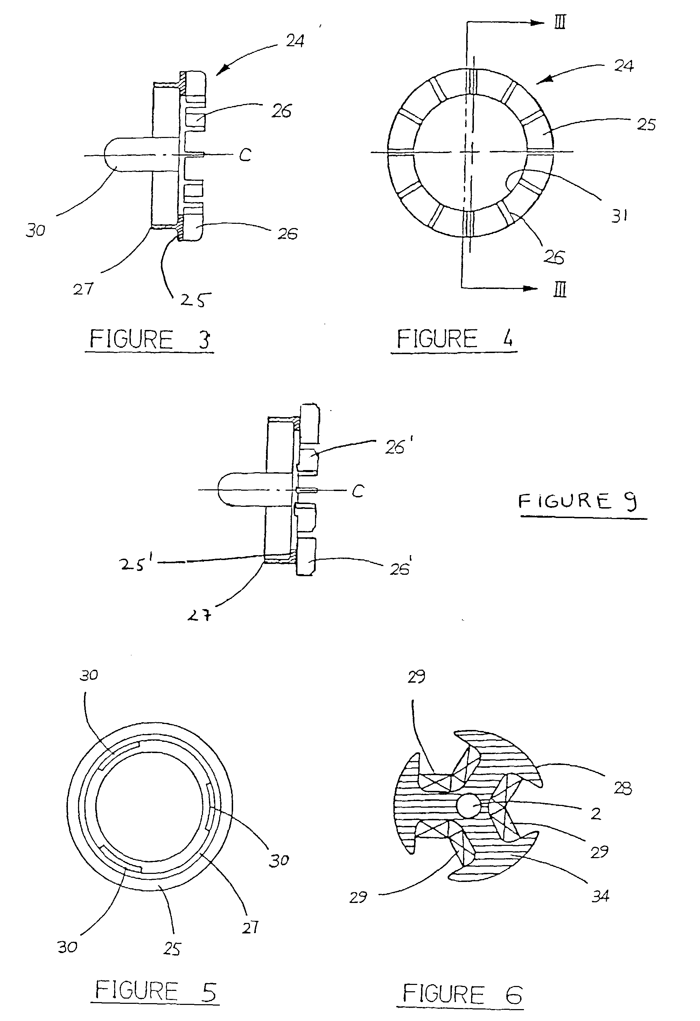

The fan 24 is illustrated in Figures 3 and 4 and is of centrifugal type, comprising a plurality of radially extending blades 26 integral with an annular blade support, which in the example shown comprises a cylindrical wall 27 which rests against the armature 3 and an annular blade reinforcing plate 25 extending radially from the end of the wall 27 remote from the armature 3. Indeed in the example shown in Figures 3 and 4 the plate 25 extends over the entire radial extent of the blades 26 and supports the latter.

The armature 3 is illustrated in cross-section in Figure 6 and comprises a central core 34 mounted fast on shaft 2 with three (in this example) mushroom cross-section extensions 28 extending radially out from the core.

The extensions 28 extend in the axial direction of the shaft 2 and coils 29 are wound around the stems of the mushrooms 28.

Fan 24 has three tabs 30 spaced at 120 degrees around the centre line C of the fan and extending rearwardly from the plate 25. Each tab 30 is arranged to project between a pair of mushrooms 28, 29 to mount the fan 24 on the end of the armature. The cylindrical wall 27 and/or the tabs 30 is glued to the armature with epoxy resin.

The annular plate 25 has a large centre eye 31 so as to expose the axial ends of the coils 29.

The fan 24 is integrally formed of nylon or other suitable plastics material by moulding.

As the motor is run, shaft 2 rotates with armature 3 and commutator 4. The fan blades 26, which are opposite slots 22 in the casing 5, force air radially outwardly through the slots 22. Air is drawn into the eye 31 inside of the blades 26. The air is thus drawn over the commutator 4 and the coils 29, to cool the armature and the commutator.

Figure 2 shows a modification of the motor of Figure 1, and shows the shaft 2 with armature 3 and commutator 4 thereon. In addition to fan 24 a second fan 24' of the same construction is mounted at the other end of armature 3. The position of the fan 24' may require the casing 5 to be lengthened to accommodate the fan 24' with repositioning of spacer 32 if necessary.

To assemble the rotor of the motor the armature 3 and commutator 4 are fitted on the shaft 2 and the armature coils wound and connected to the commutator in a manner known per se.

The eye 31 of fan 24 may then be passed over the commutator 4 and the tabs 30 inserted between the coils 29. The fan 24 is then glued to the armature.

Fan 24', if provided in addition to fan 24, is simply passed over the end of the shaft 2 and fitted as for fan 24. The rotor may then be inserted in the motor casing 5 and the end cap 10 and brush assembly fitted.

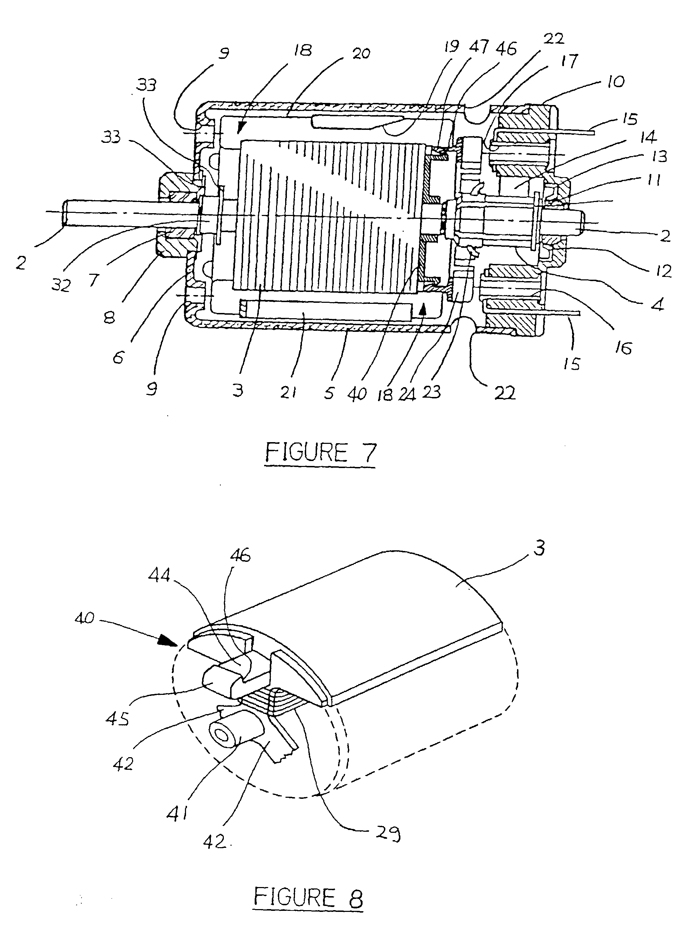

Figures 7 and 8 illustrate an alternative way of mounting the fan, which avoids the use of glue. This involves the use of a fan mounting member 40 with which the fan 24 is snap-fittably engaged. The mounting member 40, which is conveniently of plastics material, generally takes the shape of one of the armature laminations and comprises a central sleeve 41 push fitted on the shaft 2 and three mushroom shaped arms 42 extending from the sleeve 41 in equi-angularly spaced relationship. The member 40 is secured firmly to the armature by coils 29 which are wound around the arms 42 as well as around the arms of the armature. A resilient finger 44 extends in an axial direction from the head of each mushroom shaped arm 42 away from the armature 3 and has a radially outwardly enlarged head 45 to define a shoulder 46. As will be appreciated from the above the member 40 is mounted on the shaft 2 against an end face of the armature prior to winding the armature coils.

The cylindrical wall 27 of the fan has three equi-angularly spaced radially inwardly directed projections 47 which snap-fittably engage behind the shoulders 46 when the fan 24 is pushed over the fingers 44 in an axial direction. The tabs 30 are retained and these project between the mushroom-shaped extensions of the armature to locate the fan 24 angularly in relation to the armature 3 and to ensure that the projections 47 align with the shoulders 46 as the fan 24 is fitted on the member 40.

The fan in Figure 9 differs from that shown in Figures 1 to 6, in that the blade reinforcing plate 25' is of reduced size and lies within the radial confines of the cylindrical wall 27 of the fan and in that most of the fan blades 26' are extended both radially inwards and radially outwards as compared with the blades 26. However, those blades which are radially aligned with the commutator tangs 23 may terminate at their radially innermost edge in alignment with the inner edge of the blade reinforcing plate 25' so as not to hinder air flow through the passages between adjacent mushrooms 28. A fan as shown in Figure 9 has been found to provide improved cooling of the motor and this is believed to be due in part to the larger fan blades creating a larger air flow and in part to the smaller blade reinforcing plate which provides for a better air flow over the armature.

## Claims

1. A fractional horsepower direct current electric motor, comprising:
a motor casing (5)
a wound armature (3) and a commutator (4) mounted on a motor shaft (2) for rotation in the motor casing (5), the armature (3) comprising an armature core (28, 34) having a central core (34) mounted fast on the shaft (2) and a plurality of pole sections (28) extending radially outwardly from the central core (34), adjacent pole sections (28) being separated by a gap at their outer circumference, and a plurality of armature coils (29) wound around respective pole sections (28) and terminated on tangs (23) of the commutator to electrically connect the coils (29) to the commutator (4),
an end cap (10) closing the motor casing (5) and supporting brush gear of which brushes proper (14) contact the commutator (4);
windows (22) in the motor casing (5) between the armature (28, 34) and the brushes (13); and
a centrifugal fan (24) mounted about the motor shaft (2) between the core (28, 34) of the armature (3) and the brushes (14), the fan (24) comprising a plurality of radially extending fan blades (26, 26') integral with an annular blade support (25, 27; 25', 27') defining the eye of the fan (24),
characterised in that the motor is a permanent magnet direct current motor; the motor casing (5) is a can-like casing and permanent magnet means (18) is mounted in the casing (5);
the armature core pole sections (28) have a mushroom cross-section; and in that the annular blade support (25, 27; 25', 27') comprises a cylindrical wall (27) which rests on an axial end of the armature core (28, 34) at a position adjacent the radially outer peripheral surface of the armature core (28, 34) and axially extending tabs (30) extend from the cylindrical wall and are located in the gap between adjacent pole sections (34), and the blades (26,26') extend away from the support in the axial direction away from the tabs and over the commutator tangs (23), the blades (26, 26') being radially spaced from the tangs (23), such that air is drawn into the eye of the fan from over the commutator (4) and the armature coils (29) from both axial sides of the fan (24) to cool the commutator (4) and armature (3).

2. A fractional horsepower direct current electric motor, comprising:
a motor casing (5)
a wound armature (3) and a commutator (4) mounted on a motor shaft (2) for rotation in the motor casing (5), the armature (3) comprising an armature core (28, 34) having a central core (34) mounted fast on the shaft (2) and a plurality of pole sections (28) extending radially outwardly from the central core (34), adjacent pole sections (28) being separated by a gap at their outer circumference, a plurality of armature coils (29) wound around respective pole sections (28) and terminated on tangs (23) of the commutator to electrically connect the coils (29) to the commutator (4);
an end cap (10) closing the motor casing (5) and supporting brush gear of which brushes proper (14) contact the commutator (4),
windows (22) in the motor casing (5) between the armature (28, 34) and the brushes (13); and
a centrifugal fan (24) mounted about the motor shaft (2) between the core (28, 34) of the armature (3) and the brushes (14), the fan (24) comprising a plurality of radially extending fan blades (26, 26') integral with an annular blade support (25, 27; 25', 27') defining the eye (31) of the fan (24),
characterised in that the motor is a permanent magnet direct current motor; the motor casing (5) is a can-like casing and permanent magnet means (18) is mounted in the casing (5);
the armature core pole sections (28) have a mushroom cross-section; and in that
a fan mounting member (40) is mounted on an end face of the armature core (28, 34), the annular blade support (25, 27) comprises a cylindrical wall (27) adjacent the radially outer peripheral surface of the armature core (28, 34), the cylindrical wall (27) and the fan mounting member (40) having complementary formations (46, 47) by which the fan (24) is snap-fittably engaged with the fan mounting member (40), the blades (26, 26') extending away from the support in the axial direction away from the armature core and over the commutator tangs (23), the blades being radially spaced from the tangs (23), such that air is drawn into the eye of the fan (24) over the commutator (4) and the armature coils (29) from both axial sides of the fan (24) to cool the commutator (4) and armature (3).

## Patentansprüche

1. Gleichstrom-Kleinmotor umfassend
ein Motorgehäuse (5),
einen gewickelten Anker (3) und einen Kommutator (4), die für die Drehung im Motorgehäuse (5) an einer Motorwelle (2) montiert sind, wobei der Anker (3) einen Ankerkern (28, 34) mit einem fest an der Welle (2) montierten zentralen Kern (34) und eine Vielzahl von Polabschnitten (28) aufweist, die sich von dem zentralen Kerm (34) radial nach außen erstrecken, wobei benachbarte Polabschnitte (28) durch einen Spalt an ihrem Außenumfang getrennt sind, und eine Vielzahl von Ankerspulen (29), die um die jeweiligen Polabschnitte (28) gewickelt sind und an Fahnen (23) des Kommutators enden, um die Spulen (29) elektrisch mit dem Kommutator (4) zu verbinden,
eine Endkappe (10), die das Motorgehäuse (5) verschließt und den Bürstenstromabnehmer hält, dessen Bürsten (14) mit dem Kommutator (4) in Kontakt stehen;
Fenster (22) in dem Motorgehäuse (5) zwischen dem Anker (28, 34) und den Bürsten (13); und
ein Zentrifugalgebläse (24), das um die Motorwelle (2) zwischen dem Kern (28, 34) des Ankers (3) und den Bürsten (14) montiert ist, wobei das Gebläse (24) eine Vielzahl von sich radial erstreckenden Gebläseflügeln (26, 26') aufweist, die einstückig mit einer ringförmigen Flügelhalterung (25, 27; 25', 27'), welche die Ansaugöffnung des Gebläses (24) definiert, ausgebildet sind,
dadurch gekennzeichnet,
daß der Motor ein Permanentmagnet-Gleichstrommotor ist, daß das Motorgehäuse (5) ein dosenartiges Gehäuse ist und eine Permanentmagneteinrichtung (18) in dem Gehäuse (5) montiert ist;
daß die Ankerkern-Polabschnitte (28) einen pilzförmigen Querschnitt haben; und daß die ringförmige Flügelhalterung (25, 27; 25', 27') eine zylindrische Wand (27) umfaßt, die sich an dem axialen Ende des Ankerkerns (28, 34) in einer der radial äußeren Umfangsfläche des Ankerkerns (28, 34) benachbarten Position abstützt, und daß sich axial erstreckende Nasen (30) von der zylindrischen Wand erstrekken und sich in dem Spalt zwischen benachbarten Polabschnitten (34) befinden und daß sich die Flügel (26, 26') in der von den Nasen wegführenden axialen Richtung von der Halterung weg und über die Kommutatorfahnen (23) erstrecken, wobei die Flügel (26, 26') von den Zungen (23) radial beabstandet sind, derart, daß Luft von oberhalb des Kommutators (4) und der Ankerspulen (29) von beiden axialen Seiten des Gebläses (24) in die Ansaugöffnung des Gebläses gesaugt wird, um den Kommutator (4) un den Anker (3) zu kühlen.

2. Gleichstrom-Kleinmotor umfassend
ein Motorgehäuse (5),
einen gewickelten Anker (3) und einen Kommutator (4), die für die Drehung im Motorgehäuse (5) an einer Motorwelle (2) montiert sind, wobei der Anker (3) einen Ankerkern (28, 34) mit einem fest an der Welle (2) montierten zentralen Kern (34) und eine Vielzahl von Polabschnitten (28) aufweist, die sich von dem zentralen Kern (34) radial nach außen erstrecken, wobei benachbarte Polabschnitte (28) durch einen Spalt an ihrem Außenumfang getrennt sind, und eine Vielzahl von Ankerspulen (29), die um die jeweiligen Polabschnitte (28) gewickelt sind und an Fahnen (23) des Kommutators enden, um die Spulen (29) elektrisch mit dem Kommutator zu verbinden;
eine Endkappe (10), die das Motorgehäuse (5) verschließt und den Bürstenstromabnehmer hält, dessen Bürsten (14) mit dem Kommutator (4) in Kontakt stehen,
Fenster (22) in dem Motorgehäuse (5) zwischen dem Anker (28, 34) und den Bürsten (13); und
ein Zentrifugalgebläse (24), das um die Motorwelle (2) zwischen dem Kern (28, 34) des Ankers (3) und den Bürsten (14) montiert ist, wobei das Gebläse (24) eine Vielzahl von sich radial erstreckenden Gebläseflügeln (26, 26') aufweist, die einstückig mit einer ringförmigen Flügelhalterung (25, 27; 25', 27'), welche die Ansaugöffnung des Gebläses (24) definiert, ausgebildet sind,
dadurch gekennzeichnet,
daß der Motor ein Permanentmagnet-Gleichstrommotor ist; daß das Motorgehäuse (5) ein dosenartiges Gehäuse ist und eine Permanentmagneteinrichtung (18) in dem Gehäuse (5) montiert ist;
daß die Ankerkern-Polabschnitte (28) einen pilzförmigen Querschnitt haben und daß
ein Gebläse-Befestigungselement (40) an einer Endfläche des Ankerkerns (28, 34) montiert ist, daß die ringförmige Flügelhalterung (25, 27) angrenzend an die radial äußere Umfangsfläche des Ankerkerns (28, 34) eine zylindrische Wand (27) aufweist, daß die zylindrische Wand (27) und das Gebläse-Befestigungselement (40) komplementäre Ausbildungen (46, 47) haben, durch welche das Gebläse (24) mittels Schnappverbindung mit dem Gebläse-Befestigungselement (40) in Eingriff steht, daß sich die Flügel (26, 26') in der von dem Ankerkern wegführenden axialen Richtung von der Halterung weg und über die Kommutatorfahnen (23) erstrecken, wobei die Flügel radial von den Fahnen (23) beabstandet sind, derart, daß Luft von beiden axialen Seiten des Gebläses (24) über den Kommutator (4) und die Ankerspulen (29) in die Ansaugöffnung des Gebläses (24) gesaugt wird, um den Kommutator (4) und den Anker (3) zu kühlen.

## Revendications

1. Moteur électrique fractionnaire à courant continu, comprenant:
un bâti de moteur (5)
un induit bobiné (3) et un collecteur (4), monté sur un arbre du moteur (2) en vue d'une rotation dans le bâti du moteur (5), l'induit (3) comprenant un noyau d'induit (28, 34) avec un noyau central (34), monté fermement sur l'arbre (2), et plusieurs sections polaires (28), s'étendant radialement vers l'extérieur du noyau central (34), les sections polaires adjacentes (28) étant séparées par un espace au niveau de leur circonférence externe, et plusieurs bobines d'induit (29) enroulées autour des sections polaires respectives (28) et connectées à des tenons (23) du collecteur pour connecter électriquement les bobines (29) au collecteur (4);
un bouchon d'extrémité (10) fermant le bâti du moteur (5) et supportant un support de balais, dont les balais mêmes (14) sont en contact avec le collecteur (4);
des fenêtres (22) dans le bâti du moteur (5) entre l'induit (28, 34) et les balais (13); et
un ventilateur centrifuge (24) monté autour de l'arbre du moteur (2), entre le noyau (28, 34) de l'induit (3) et les balais (14), le ventilateur (24) comprenant plusieurs pales de ventilateur à extension radiale (26, 26'), faisant partie intégrante d'un support de pales annulaire (25, 27; 25', 27') définissant l'orifice d'aspiration du ventilateur (24),
caractérisé en ce que le moteur est un moteur à courant continu à aimant permanent, le bâti du moteur (5) étant un bâti en forme de boîtier et un moyen d'aimant permanent (18) étant monté dans le bâti (5);
les sections polaires du noyau de l'induit (28) ont une section transversale en forme de champignon; et en ce que le support de pales annulaire (25, 27; 25', 27') comprend une paroi cylindrique (27) reposant sur une extrémité axiale du noyau de l'induit (28, 34) en une position adjacente à la surface périphérique externe en direction radiale du noyau de l'induit (28, 34), des pattes à extension axiale (30) s'étendant à partir de la paroi cylindrique et étant agencées dans l'espace entre les sections polaires adjacentes (34), les pales (26, 26') s'écartant du support dans la direction axiale, à l'écart des pattes et au-dessus des tenons du collecteur (23), les pales (26, 26') étant espacées radialement des tenons (23), de sorte que de l'air est entraîné dans l'orifice d'aspiration du ventilateur d'au-dessus du collecteur (4) et des bobines de l'induit (29), à partir des deux côtés axiaux du ventilateur (24), pour refroidir le collecteur (4) et l'induit (3).

2. Moteur électrique fractionnaire à courant continu, comprenant
un bâti de moteur (5)
un induit bobiné (3) et un collecteur (4), monté sur un arbre du moteur (2) en vue d'une rotation dans le bâti du moteur (5), l'induit (3) comprenant un noyau d'induit (28, 34) avec un noyau central (34), monté fermement sur l'arbre (2) et plusieurs sections polaires (28), s'étendant radialement vers l'extérieur du noyau central (34), les sections polaires adjacentes (28) étant séparées par un espace au niveau de leur circonférence externe, et plusieurs bobines d'induit (29) enroulées autour des sections polaires respectives (28) et connectées à des tenons (23) du collecteur pour connecter électriquement les bobines (29) au collecteur (4);
un bouchon d'extrémité (10) fermant le bâti du moteur (5) et supportant un support de balais, dont les balais mêmes (14) sont en contact avec le collecteur (4);
des fenêtres (22) dans le bâti du moteur (5) entre l'induit (28, 34) et les balais (13); et
un ventilateur centrifuge (24) monté autour de l'arbre du moteur (2), entre le noyau (28, 34) de l'induit (3) et les balais (14), le ventilateur (24) comprenant plusieurs pales de ventilateur à extension radiale (26, 26'), faisant partie intégrante d'un support de pales annulaire (25, 27; 25', 27') définissant l'orifice d'aspiration du ventilateur (24),
caractérisé en ce que le moteur est un moteur à courant continu à aimant permanent, le bâti du moteur (5) étant un bâti en forme de boîtier et un moyen d'aimant permanent (18) étant monté dans le bâti (5);
les sections polaires du noyau de l'induit (28) ont une section transversale en forme de champignon; et en ce que
un élément de montage du ventilateur(40) est monté sur une face d'extrémité du noyau de l'induit (28, 34), le support de pales annulaire (25, 27) comprenant une paroi cylindrique (27) adjacente à la surface périphérique externe en direction radiale du noyau de l'induit (28, 34), la paroi cylindrique (27) et l'élément de montage du ventilateur (40) comportant des structures complémentaires (46, 47), permettant un engagement par encliquetage dans l'élément de montage du ventilateur (40), les pales (26, 26') s'écartant du support dans la direction axiale, à l'écart du noyau de l'induit et au-dessus des tenons du collecteur (23), les pales étant espacées radialement des tenons (23), de sorte que de l'air est entraîné dans l'orifice d'aspiration du ventilateur (24) d'au-dessus du collecteur (4) et des bobines de l'induit (29), à partir des deux côtés axiaux du ventilateur (24), pour refroidir le collecteur (4) et l'induit (3).
